# EUROPEAN PATENT SPECIFICATION

(11) **EP 4 384 785 B1**
(45) Date of publication and mention of the grant of the patent: **01.10.2025**
(21) Application number: 22764748.4
(22) Date of filing: 12.08.2022
(51) Int. Cl.: G01K 1/14, G01K 13/02

(54) **METHOD FOR DETERMINING PISTON TEMPERATURE IN AN ENGINE**
VERFAHREN ZUR BESTIMMUNG DER KOLBENTEMPERATUR IN EINEM MOTOR
PROCÉDÉ DE DÉTERMINATION DE LA TEMPÉRATURE D'UN PISTON DANS UN MOTEUR

(30) Priority: 12.08.2021 US 202163232243 P
(43) Date of publication of application: 19.06.2024
(73) Proprietor: BRP-Rotax GmbH & Co. KG, 4623 Gunskirchen (AT)
(72) Inventor: SEYRL, Michael, 4600 Wels (AT); ENNSMANN, Roland, 4623 Gunskirchen (AT)
(74) Representative: Murgitroyd & Company
(86) International application number: PCT/EP2022/072661
(87) International publication number: WO 2023/017148

(56) References cited:
- EP-A1- 3 770 413
- DE-A1- 102018 212 949
- JP-A- 2007 032 501
- JP-A- 2018 193 877
- US-A1- 2015 219 040

## Description

### FIELD OF THE TECHNOLOGY

The present technology relates to vehicle engine assemblies and methods for determining piston temperature in engines.

### BACKGROUND

For internal combustion engines, such as those used in snowmobiles, the efficiency of the combustion process can be increased by compressing the air entering the engine. This can be accomplished using a turbocharger connected to the air intake and exhaust systems of the snowmobiles.

While use of a turbocharger to increase air pressure can aid in improving engines efficiency, the process of compression can also cause the air to heat. Heating of air in a turbocharger can come from both a pressure-related temperature rise due to the pressure-temperature relationship, as well as conduction of heat from exhaust gas turning the turbine through the turbocharger to the compressor.

When compressed air from the turbocharger is too hot, the efficiency and performance of the engine can suffer due to engine detonation. Also referred to as "knocking", engine detonation decreases engine efficiency by consuming a portion of the air-gas mixture at the wrong part of the stroke cycle of the engine. Knocking can also occur when the engine or pistons therein become too hot.
JP 2007 032501 discloses a fuel injection control device comprising a port injection valve and a cylinder injection valve. The device acquires parameters relating to the temperature of an intake valve on which fuel injected into a port is mainly deposited and to the temperature of a piston on which fuel injected into a cylinder is mainly deposited. The device measures a stopping time for the internal combustion engine, and sets the rate of the fuel injected into the intake port to that injected into the cylinder at starting the internal combustion engine in accordance with the parameter values at stopping the internal combustion engine and the stopping time required for starting.

There remains a desire for vehicle systems for monitoring engine heating.

### SUMMARY

According to the present invention, there is provided a method for determining a piston component temperature in an engine according to claim 1.

### BRIEF DESCRIPTION OF THE DRAWINGS

For a better understanding of the present technology, as well as other aspects and further features thereof, reference is made to the following description which is to be used in conjunction with the accompanying drawings, where:
Figure 1 is a left side elevation view of a snowmobile;
Figure 2 is a top, rear, right side perspective view of an engine, air intake system and exhaust system of the snowmobile of Figure 1;
Figure 3 is a cross-sectional view of the engine and some portions of the air intake system and the exhaust system of Figure 2;
Figure 4 is a top, rear perspective view of a cylinder head of the engine of Figure 2;
Figure 5 is a front, bottom perspective view of the cylinder head of Figure 4;
Figure 6 is a top plan view of the cylinder head of Figure 4;
Figure 7 is a cross-sectional view of the cylinder head of Figure 4, taken along line 7-7 of Figure 6;
Figure 8 is a cross-sectional view of a portion of the cylinder head of Figure 4, taken along line 8-8 of Figure 6;
Figure 9 is a perspective view of a temperature sensor of the cylinder head of Figure 4;
Figure 10 is a perspective view of a sensor sleeve of the cylinder head of Figure 4;
Figure 11 is an end-on view of the sensor sleeve of Figure 10;
Figure 12 is a cross-sectional view of the sensor sleeve of Figure 10, taken along line 12-12 of Figure 11; and
Figure 13 is a flowchart illustrating a method for determining piston temperature in the engine of Figure 2.

It should be noted that the Figures may not be drawn to scale, except where otherwise noted.

### DETAILED DESCRIPTION

The present technology is described herein with respect to a snowmobile 10 having an internal combustion engine and two skis. However, it is contemplated that some aspects of the present technology may apply to other types of vehicles such as, but not limited to, snowmobiles with a single ski, road vehicles having two, three, or four wheels, off-road vehicles, all-terrain vehicles, side-by-side vehicles, and personal watercraft.

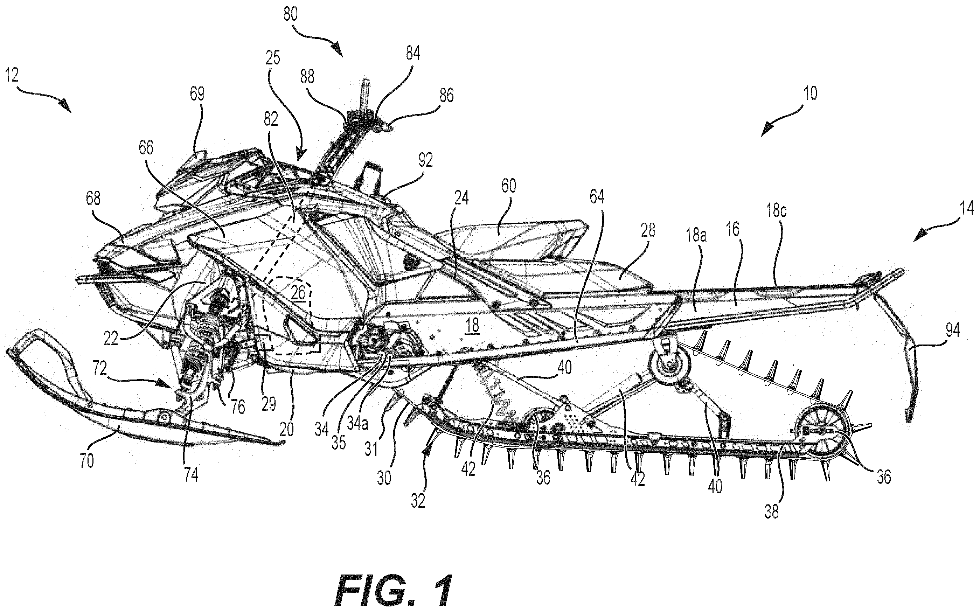

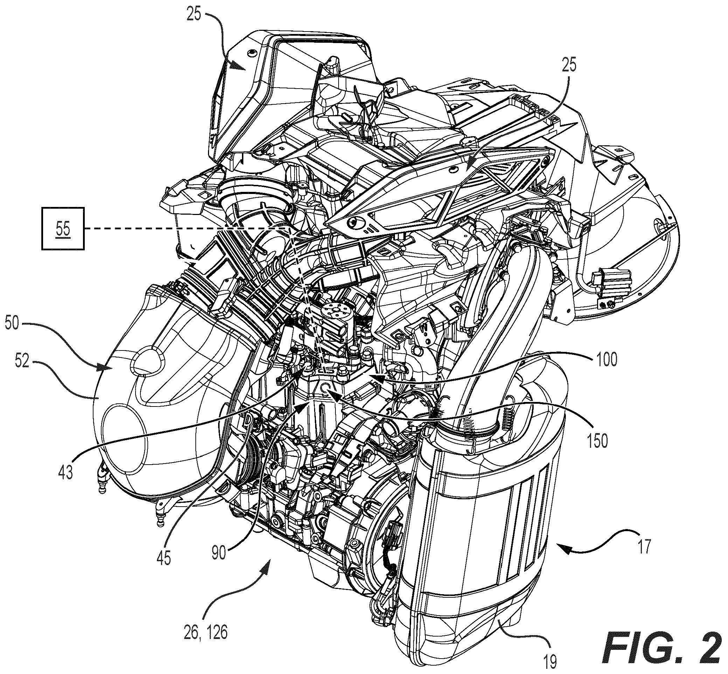

With reference to Figures 1 and 2, a snowmobile 10 according to the present technology will be described. The snowmobile 10 includes a forward end 12 and a rearward end 14. The snowmobile 10 includes a vehicle body in the form of a frame or chassis 16 which includes a tunnel 18, an engine cradle portion 20, a front suspension module 22 and an upper structure 24.

An engine assembly 126, including an internal combustion engine 26 and two temperature sensors 150 connected thereto, is carried in an engine compartment defined in part by the engine cradle portion 20 of the frame 16. The engine 26 receives air from an air intake system 50. A fuel tank 28, supported above the tunnel 18, supplies fuel to the engine 26 for its operation. The engine assembly 126, the engine 26, and the sensors 150 are described in further detail below.

An endless drive track 30 is disposed generally under the tunnel 18 and is operatively connected to the engine 26 through a belt transmission system and a reduction drive (not shown). The endless drive track 30 is driven to run about a rear suspension assembly 32 operatively connected to the tunnel 18 for propulsion of the snowmobile 10. The endless drive track 30 has a plurality of lugs 31 extending from an outer surface thereof to provide traction to the track 30.

The rear suspension assembly 32 includes drive sprockets 34, idler wheels 36 and a pair of slide rails 38 in sliding contact with the endless drive track 30. The drive sprockets 34 are mounted on an axle 35 and define a sprocket axis 34a. The axle 35 is operatively connected to a crankshaft (not shown) of the engine 26. The slide rails 38 are attached to the tunnel 18 by front and rear suspension arms 40 and shock absorbers 42. It is contemplated that the snowmobile 10 could be provided with a different implementation of a rear suspension assembly 32 than the one shown herein.

A straddle seat 60 is positioned atop the fuel tank 28. A fuel tank filler opening covered by a cap 92 is disposed on the upper surface of the fuel tank 28 in front of the seat 60. It is contemplated that the fuel tank filler opening could be disposed elsewhere on the fuel tank 28. The seat 60 is adapted to accommodate a driver of the snowmobile 10. The seat 60 could also be configured to accommodate a passenger. A footrest 64 is positioned on each side of the snowmobile 10 below the seat 60 to accommodate the driver's feet.

At the front end 12 of the snowmobile 10, fairings 66 enclose the engine 26 and the belt transmission system, thereby providing an external shell that not only protects the engine 26 and the transmission system but can also make the snowmobile 10 more aesthetically pleasing. The fairings 66 include a hood 68 and one or more side panels which can be opened to allow access to the engine 26. A windshield 69 connected to the fairings 66 acts as a wind screen to lessen the force of the air on the rider while the snowmobile 10 is moving.

Two skis 70 positioned at the forward end 12 of the snowmobile 10 are attached to the front suspension module 22 of the frame 16 through a front suspension assembly 72. The front suspension module 22 is connected to the front end of the engine cradle portion 20. The front suspension assembly 72 includes ski legs 74, supporting arms 76 and ball joints (not shown) for operatively connecting to the respective ski leg 74, supporting arms 76 and a steering column 82 (schematically illustrated).

A steering assembly 80, including the steering column 82 and a handlebar 84, is provided generally forward of the seat 60. The steering column 82 is rotatably connected to the frame 16. The lower end of the steering column 82 is connected to the ski legs 74 via steering rods (not shown). The handlebar 84 is attached to the upper end of the steering column 82. The handlebar 84 is positioned in front of the seat 60. The handlebar 84 is used to rotate the steering column 82, and thereby the skis 70, in order to steer the snowmobile 10. A throttle operator 86 in the form of a thumb-actuated throttle lever is mounted to the right side of the handlebar 84. Other types of throttle operators, such as a finger-actuated throttle lever and a twist grip, are also contemplated. A brake actuator 88, in the form of a hand brake lever, is provided on the left side of the handlebar 84 for braking the snowmobile 10 in a known manner. It is contemplated that the windshield 69 could be connected directly to the handlebar 84.

At the rear end of the snowmobile 10, a snow flap 94 extends downward from the rear end of the tunnel 18. The snow flap 94 protects against dirt and snow that can be projected upward from the drive track 30 when the snowmobile 10 is being propelled by the moving drive track 30. It is contemplated that the snow flap 94 could be omitted.

The snowmobile 10 includes other components such as a display cluster, and the like. As it is believed that these components would be readily recognized by one of ordinary skill in the art, further explanation and description of these components will not be provided herein. Further details regarding such snowmobiles can be found in United States Patent No. 10,526,045, issued on January 7, 2020 and United States Patent No. 10,865,700, issued on December 15, 2020.

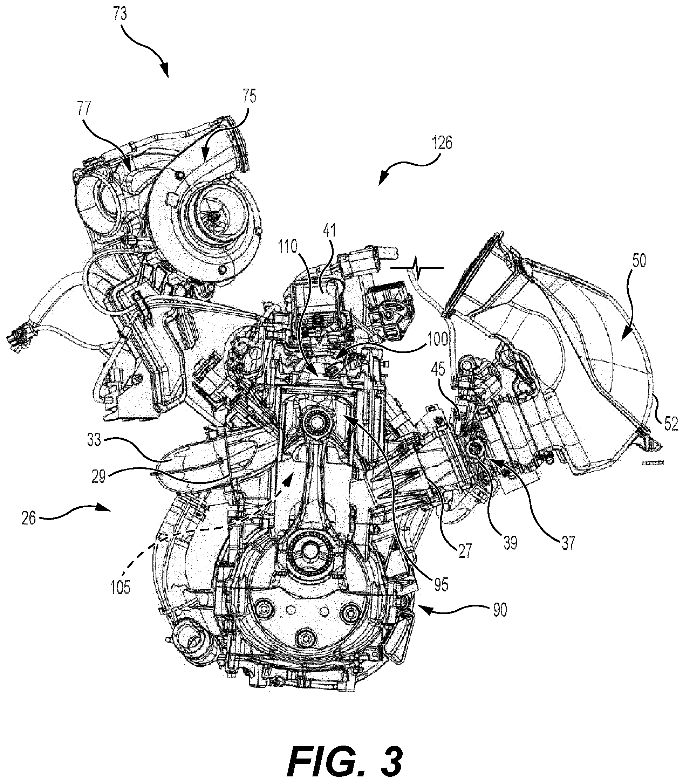

With additional reference to Figure 3, the engine assembly 126 is illustrated in more detail. The assembly 126 includes the engine 26, which in the present embodiment is an inline, two-cylinder, two-stroke, internal combustion engine 26. The engine 26 is formed from an engine block 90 and a cylinder head 100 connected to the block 90. Two cylinders 105 are defined by the engine block 90 and the cylinder head 100. The engine 26 includes two pistons 95, one piston 95 being disposed in each of the cylinders 105. The cylinders 105 are oriented with their cylinder axes disposed vertically. Two variable volume combustion chambers 110, where engine combustion occurs to drive the pistons 95, are defined in the engine 26. Specifically, each combustion chamber 110 is defined between the corresponding cylinder 105, the corresponding piston 95, and the cylinder head 100. It is contemplated that the engine 26 could be configured differently. For example, the engine 26 could have more or less than two cylinders 105/combustion chambers 110, and the cylinders 105 could be arranged in a V-configuration instead of in-line. It is contemplated that in some implementations the engine 26 could be a four-stroke internal combustion engine, a carbureted engine, or any other suitable engine capable of propelling the snowmobile 10.

The engine 26 receives air from the air intake system 50, specifically from a primary airbox 52, via engine air inlets 27 defined in the rear portion of each cylinder of the engine 26. Each air inlet 27 is connected to a throttle body 37 of the air intake system 50. The throttle body 37 includes a throttle valve 39 which rotates to regulate the amount of air flowing through the throttle body 37 into the corresponding cylinder 110 of the engine 26.

A throttle valve actuator (not shown) is operatively connected to the throttle valve 39 to change the position of the throttle valve 39 and thereby adjust the opening of the throttle valve 39 with operation of the throttle lever 86 on the handlebar 84. The position and the movement of the throttle valve 39 is monitored by a throttle valve position sensor (not shown) operatively connected to the throttle valve 39. In the present embodiment, the throttle valve actuator is in the form of an electric motor (not shown). The electric motor changes the position of the throttle valve 39 based on input signals received from an electronic control module (not shown) which in turn receives inputs signals from a position sensor associated with the throttle lever 86 on the handlebars 84. Further details regarding such drive-by wire throttle systems can be found in United States Patent No. 10,029,567, issued on July 24, 2018. It is also contemplated the throttle valve actuator could ne implemented by a mechanical linkage.

The engine 26 receives fuel from the fuel tank 28 via Direct Injection (DI) injectors 41 and Multi Point Fuel Injection (MPFI) injectors 45 (both shown in at least Figure 3), having an opening in the cylinders 105 for providing fuel to the combustion chambers 110. The fuel-air mixture in each of the left and right combustion chambers 110 of the engine 26 is ignited by an ignition system including spark plugs 43 (best seen in Figure 2). Engine output power, torque and engine speed are determined in part by throttle opening and in part by the ignition timing as well as by various characteristics of the fuel-air mixture such as its composition, temperature, pressure and the like.

Exhaust gases resulting from the combustion events of the combustion process are expelled from the engine 26 via an exhaust system 17. As shown in Figure 3, an exhaust outlet 29 is defined in the front portion of each cylinder of the engine 26. The exhaust outlets 29 are fluidly connected to an exhaust manifold 33. The exhaust system 17 also includes a muffler 19 (Figure 2) fluidly connected to the exhaust manifold 33.

The vehicle 10 also includes a turbocharger 73 operatively connected to the engine 26. The turbocharger 73 compresses air and feeds it to the engine 26. As shown in Figure 3, the turbocharger 73 has an air compressor 75 and an exhaust turbine 77. The air compressor 75 includes a compressor wheel and is part of the air intake system 50. Intake air flowing past the rotating compressor wheel is compressed thereby. The rotation of the compressor wheel is powered by a turbine wheel (not shown) of the exhaust turbine 77, which is part of the exhaust system 17 (parts of the exhaust system 17 connecting the turbine 77 to the engine 26 have been omitted to simplify the figures). The turbine wheel is rotated about a turbine axis (not shown) by exhaust gases expelled from the engine 26 and directed to flow over the blades of the turbine wheel. It is contemplated that, in some implementations, the air compressor 75 could be a supercharger, in which the compressor wheel would be directly powered by the engine 26. While the current technology is described herein for a turbocharged engine assembly 126, it is contemplated that in some non-limiting embodiments the turbocharger 73 could be omitted (e.g. if the engine is an outboard engine for a personal watercraft).

The vehicle 10 further includes a system controller 55 (shown schematically) operatively connected to an engine control unit (or ECU) and/or the electrical system (not shown) of the snowmobile 10. The engine control unit is in turn operatively connected to the engine 26.

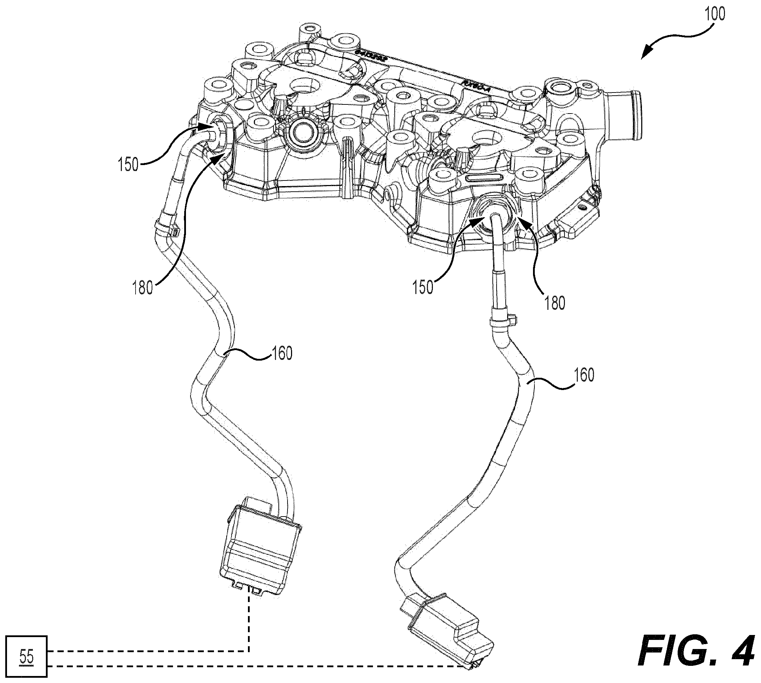

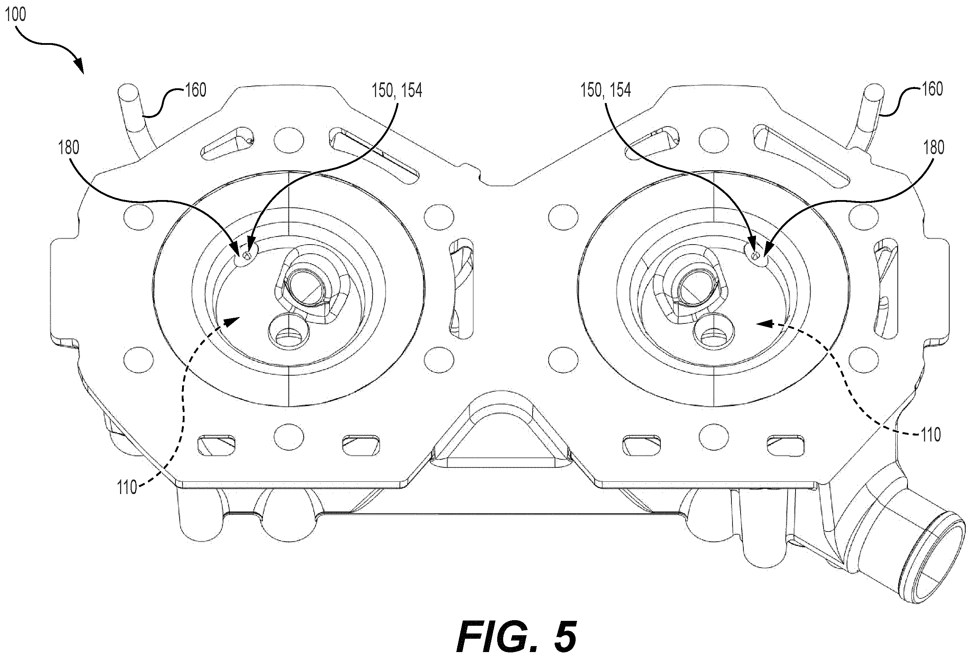

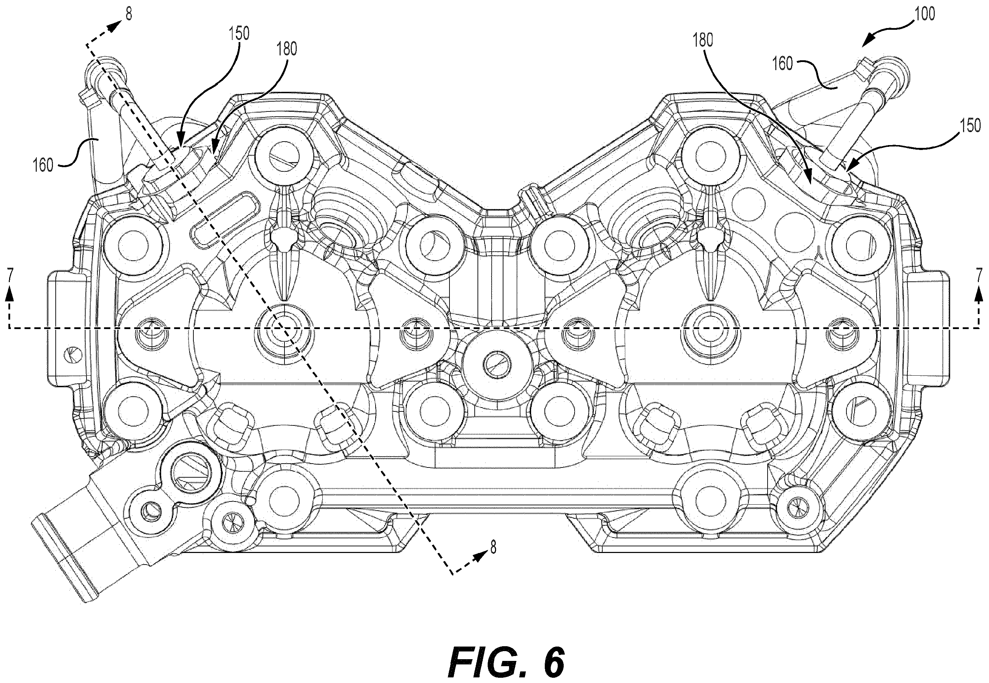

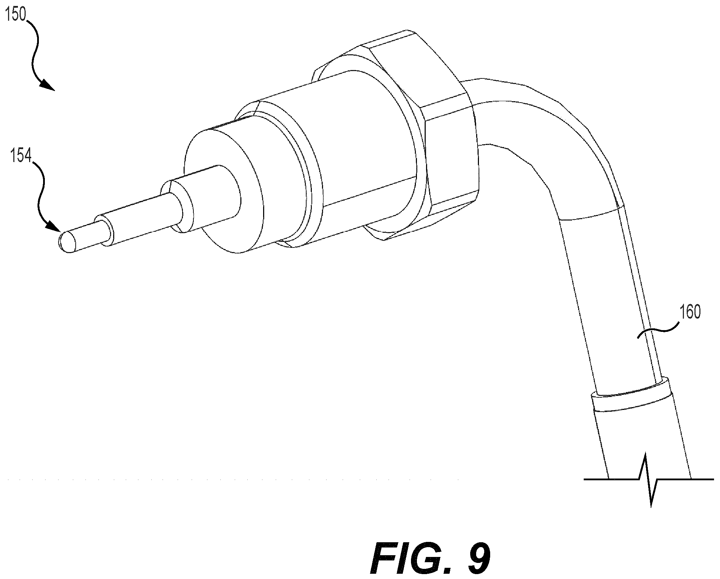

With reference to Figures 4 to 9, the engine assembly 126 includes the two temperature sensors 150 mentioned briefly above; one such sensor 150 is shown in isolation in Figure 9. Each sensor 150 is configured and arranged for determining a temperature of fluids within one of the combustion chambers 110. In the present embodiment, the temperature of fluids (*i.e.* air and fuel) within the combustion chambers 110 sensed by the sensor 150 is used to estimate a temperature of the pistons 95, the piston pins thereof and/or piston bosses thereof. To determine the temperature of a given piston 95, a linear offset, *i.e.* a constant value of 180°C (in the present embodiment), is added to a temperature sensed by the respective temperature sensor 150. The linear offset could vary depending on the embodiment and is determined for a particular embodiment of the engine 26 by initial calibration testing by directly monitoring an actual temperature of the pistons 95. As temperature sensors configured to directly monitor piston temperature are both expensive and often have short lifetimes due to engine conditions, monitoring the temperature of the fluid in the combustion chamber 110 provides a less expensive, longer lasting alternative. In at least some other embodiments, the temperature or changes in the temperature of fluids within the combustion chambers 110 could be treated as representative of the temperature of the respective piston 95.

While the present embodiment includes one sensor 150 for each of the combustion chambers 110, it is contemplated that the assembly 126 could include only one sensor 150 arranged to determine a temperature of one of the combustion chambers 110. It is also contemplated, for embodiments of the engine 26 with more than two cylinders 105/combustion chambers 110 and pistons 95, that the engine assembly 126 could include more than two sensors 150. It is further contemplated that the engine 26 could include more than two pistons 95 and corresponding cylinders 105, while including two or less temperature sensors 150.

In the illustrated embodiment, each temperature sensor 150 is connected to and extends through the cylinder head 100. Details pertaining to the manner of connection of the sensors 150 to the cylinder head 100 are described further below. It is contemplated that temperature sensors 150 could be connected to the engine block 90 in some embodiments. Specific placement of the sensors 150 could depend on various factors, including space available surrounding the engine 26 and a travel path of the pistons 95 in the cylinders 105.

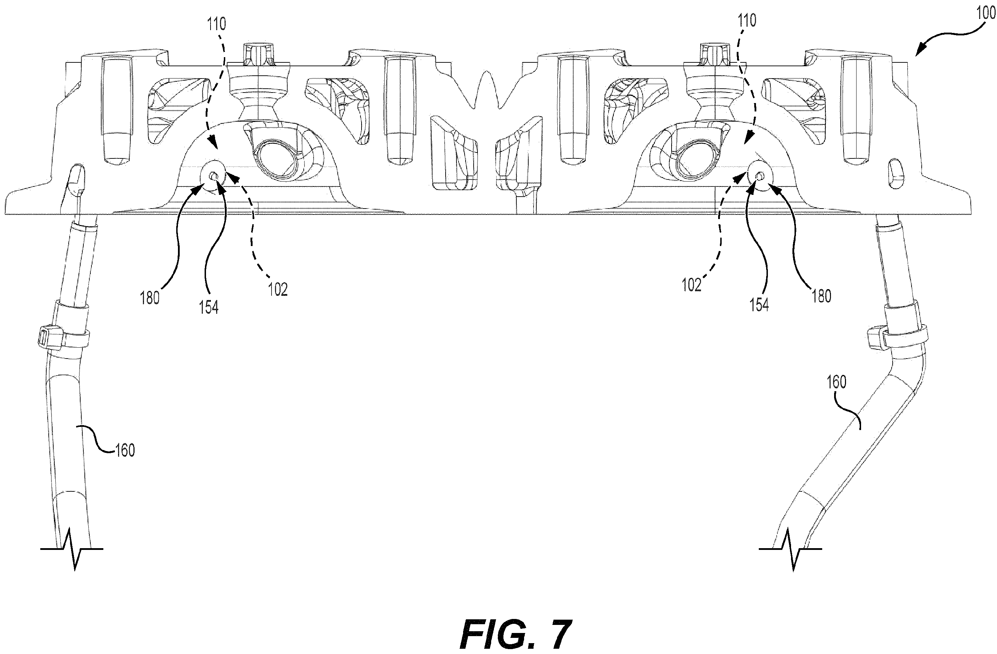

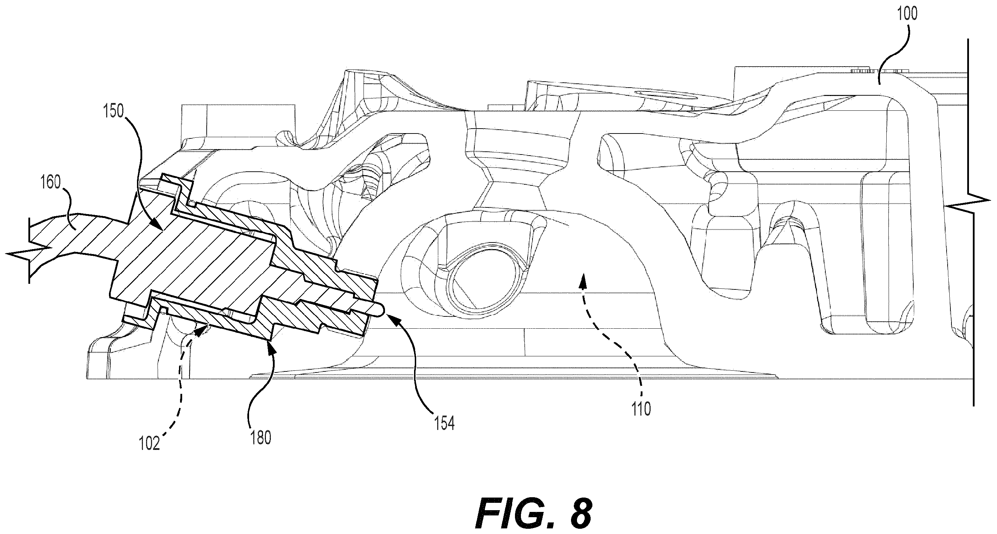

As can be seen in at least Figures 7 and 8, the cylinder head 100 defines therein two openings 102 for receiving the sensors 150. Each opening 102 extends from a rear, exterior side of the cylinder head 100 through to one of the combustion chambers 110. It is contemplated that one or both openings 102 could be defined in a front side of the cylinder head 100 or a corresponding one of the left and right sides of the cylinder head 100.

According the present non-limiting embodiment, the temperature sensors 150 are thermocouple sensors 150. It is contemplated that one or both the temperature sensors 150 could be differently implemented, including using, for example, resistance temperature detectors. Each sensor 150 has a distal end 154 which protrudes at least partially into the corresponding combustion chamber 110 when installed in the cylinder head 100. Approximately a third of the distal end 154 of the sensor 150 is in the chamber 110 (see Figure 8), but it is contemplated that the sensor 150 could extend farther or less far into the chamber 110 depending on the embodiment or placement of the sensor 150. Each temperature sensor 150 is communicatively connected to a cable 160 for transferring temperature information, each cable 160 being communicatively connected to the system controller 55 (see Figure 4). In some embodiments, the sensors 150 could connect instead to the ECU via the cables 160.

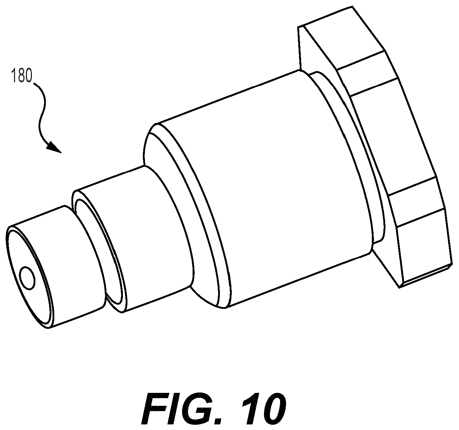

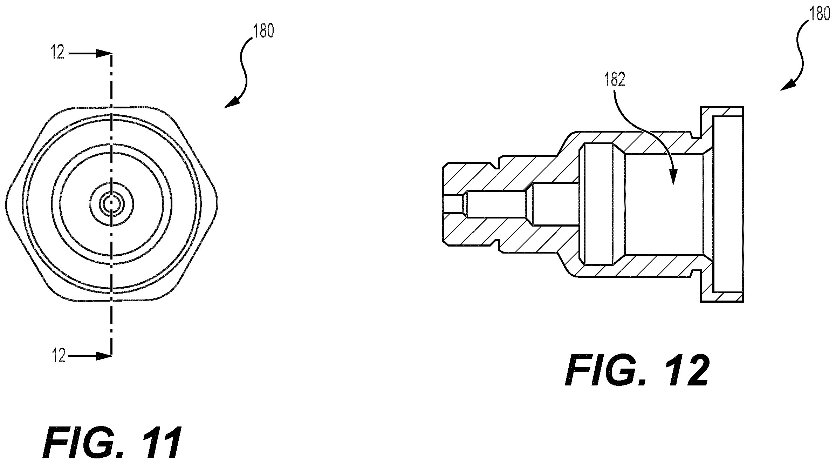

With continued reference to Figure 8 and additional reference to Figures 10 to 12, the illustrated non-limiting embodiment includes sensor sleeves 180 for connecting the temperature sensors 150 to the cylinder head 100. The sensor sleeves 180 are formed from stainless steel. One sensor sleeve 180 is disposed in each opening 102 in the cylinder head 100 (Figure 8). An interior 182 of the sleeve 180 is sized and shaped to receive one of the sensors 150 therein (Figure 12). Each of the sensors 150 is press-fit into a corresponding one of the sleeves 180 to aid in maintaining the sensor 150 in its position in the cylinder head 100. It at least some embodiments, it is contemplated that the sleeves 180 could be omitted, and the openings 102 could be sized and shaped for receiving the sensors 150 directly therein. It is also contemplated that the sleeves 180 could be integrally formed with the cylinder head 100.

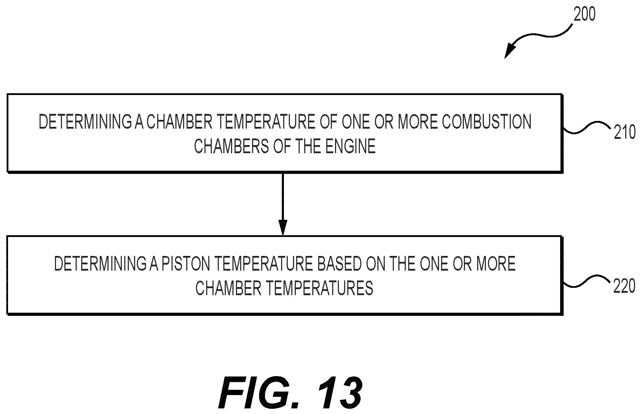

With reference to Figure 13, a non-limiting implementation of a method 200 for determining piston temperature in an engine 26. The method 200 is performed by the system controller 55 according to the present technology. In some implementations, it is contemplated that an additional or substitute computational system could be implemented to perform the method 200.

The method 200 begins at step 210 with determining, by one or both of the temperature sensors 150 connected to the controller 55, a chamber temperature of fluid within one or both of the combustion chambers 110 of the engine 26.

The method 200 continues, at step 220, with determining, by the system controller 55, the piston temperature based on the chamber temperature of the combustion chamber 110. In the illustrated embodiment, the method 200 includes determining the piston temperature of the piston 95 of each of the cylinders 105. In some embodiments, only one or some of the temperatures of the combustion chambers 110 and/or pistons 95 may be determined.

In some embodiments, determining the piston temperature includes calculating a piston temperature using the determined temperature of fluids in the combustion chamber 110. Calculating the piston temperature includes adjusting a sensed temperature by a linear offset value to the chamber temperature.

In at least some embodiments, the method 200 could further include determining the linear offset value between a given chamber temperature and a given piston temperature. In at least some embodiments, determining the offset value includes simultaneously measuring a temperature of the combustion chamber 110 using the sensor 150 and measuring a temperature of the respective piston 95 directly, with the engine 26 operating with a variety of different operating parameters. The piston temperature could be measured using an integrated temperature sensor (not illustrated) disposed in the piston 95. In some other embodiments, a remote-sensing thermometer, such as a pyrometer, could be used. A difference between the combustion chamber temperature and the direct piston temperature measurement could then be compared to determining the offset value. In at least some cases, it is also contemplated that a map of offset values could be determined, where the offset applied could vary based on one or more engine operation parameters.

## Claims

1. A method (200) for determining a piston component temperature in an engine (26), the method being performed by a controller (55) of a vehicle, the method comprising:
determining (210), by at least one temperature sensor (150) connected to the controller, a chamber temperature of at least one combustion chamber (110) of the engine, at least part of the at least one temperature sensor being in contact with fluid within the at least one combustion chamber; and
determining (220), by the controller, the piston component temperature based on the chamber temperature by calculating the piston component temperature based on the chamber temperature, **characterized by**
calculating the piston component temperature comprising applying a linear offset value to the chamber temperature.

2. The method of claim 1, wherein determining the piston component temperature comprises determining at least one of:
a piston temperature of at least one piston (95) of the engine;
a piston boss temperature of at least one piston boss of the engine; and
a piston pin temperature of at least one piston pin of the engine.

3. The method of claim 1, further comprising calibrating the temperature sensor by determining the linear offset value between a given chamber temperature and a given piston component temperature.

4. The method of claim 1, wherein:
determining the chamber temperature of the at least one combustion chamber comprises:
determining a first chamber temperature of a first combustion chamber of the engine, and
determining a second chamber temperature of a second combustion chamber of the engine;
determining the piston component temperature based on the chamber temperature comprises:
determining a first temperature for a first piston at least partially defining the first combustion chamber based on the first chamber temperature, and
determining a second temperature for a second piston at least partially defining the combustion chamber based on the second chamber temperature.

## Patentansprüche

1. Verfahren (200) zum Bestimmen einer Kolbenkomponententemperatur in einem Motor (26), wobei das Verfahren von einer Steuerung (55) eines Fahrzeugs durchgeführt wird, wobei das Verfahren Folgendes umfasst:
Bestimmen (210) einer Raumtemperatur mindestens eines Brennraums (110) des Motors durch mindestens einen mit der Steuerung verbundenen Temperatursensor (150), wobei mindestens ein Teil des mindestens einen Temperatursensors mit Fluid innerhalb des mindestens einen Brennraums in Kontakt steht; und
Bestimmen (220) der Kolbenkomponententemperatur durch die Steuerung auf der Grundlage der Raumtemperatur durch Berechnen der Kolbenkomponententemperatur auf der Grundlage der Raumtemperatur, **dadurch gekennzeichnet, dass**
das Berechnen der Kolbenkomponententemperatur das Anwenden eines linearen Offsetwerts auf die Raumtemperatur umfasst.

2. Verfahren nach Anspruch 1, wobei das Bestimmen der Kolbenkomponententemperatur das Bestimmen von mindestens einem der Folgenden umfasst:
einer Kolbentemperatur von mindestens einem Kolben (95) des Motors;
einer Kolbennabentemperatur von mindestens einer Kolbennabe des Motors; und
einer Kolbenbolzentemperatur von mindestens einem Kolbenbolzen des Motors.

3. Verfahren nach Anspruch 1, ferner umfassend das Kalibrieren des Temperatursensors durch Bestimmen des linearen Offsetwerts zwischen einer gegebenen Raumtemperatur und einer gegebenen Kolbenkomponententemperatur.

4. Verfahren nach Anspruch 1, wobei:
das Bestimmen der Raumtemperatur des mindestens einen Brennraums Folgendes umfasst:
Bestimmen einer ersten Raumtemperatur eines ersten Brennraums des Motors und
Bestimmen einer zweiten Raumtemperatur eines zweiten Brennraums des Motors;
das Bestimmen der Kolbenkomponententemperatur auf der Grundlage der Raumtemperatur Folgendes umfasst:
Bestimmen einer ersten Temperatur für einen ersten Kolben, der den ersten Brennraum mindestens teilweise definiert, auf der Grundlage der ersten Raumtemperatur und
Bestimmen einer zweiten Temperatur für einen zweiten Kolben, der den Brennraum mindestens teilweise definiert, auf der Grundlage der zweiten Raumtemperatur.

## Revendications

1. Procédé (200) permettant de déterminer la température d'un composant de piston dans un moteur (26), le procédé étant mis en œuvre par une unité de commande (55) d'un véhicule, le procédé comprenant :
la détermination (210), par au moins un capteur de température (150) connecté à l'unité de commande, d'une température de chambre d'au moins une chambre de combustion (110) du moteur, au moins une partie de l'au moins un capteur de température étant en contact avec le fluide à l'intérieur de l'au moins une chambre de combustion ; et
la détermination (220), par l'unité de commande, de la température de composant de piston en fonction de la température de chambre en calculant la température de composant de piston en fonction de la température de chambre, **caractérisé par**
le calcul de la température de composant de piston comprenant l'application d'une valeur de compensation linéaire à la température de chambre.

2. Procédé selon la revendication 1, dans lequel la détermination de la température de composant de piston comprend la détermination d'au moins l'un des éléments suivants :
une température de piston d'au moins un piston (95) du moteur ;
une température de bossage de piston d'au moins un bossage de piston du moteur ; et
une température d'axe de piston d'au moins un axe de piston du moteur.

3. Procédé selon la revendication 1, comprenant en outre l'étalonnage du capteur de température en déterminant la valeur de compensation linéaire entre une température de chambre donnée et une température de composant de piston donnée.

4. Procédé selon la revendication 1, dans lequel :
la détermination de la température de chambre de l'au moins une chambre de combustion comprend :
la détermination d'une première température de chambre d'une première chambre de combustion du moteur, et
la détermination d'une seconde température de chambre d'une seconde chambre de combustion du moteur ;
la détermination de la température de composant de piston en fonction de la température de chambre comprend :
la détermination d'une première température pour un premier piston définissant au moins partiellement la première chambre de combustion sur la base de la première température de chambre, et
la détermination d'une seconde température pour un second piston définissant au moins partiellement la chambre de combustion sur la base de la seconde température de chambre.
